# EUROPEAN PATENT SPECIFICATION

(11) **EP 0 850 998 B1**
(45) Date of publication and mention of the grant of the patent: **28.04.2004**
(21) Application number: 97310025.8
(22) Date of filing: 11.12.1997
(51) Int. Cl.: C08L 83/04, C08L 83/07

(54) **Method for making rubber-modified rigid silicone resins and composites produced therefrom**
Verfahren zur Herstellung von Gummi-modifizierte feste Silikon-Harze und daraus hergestellte Komposite
Méthode pour la préparation des résines de silicone rigides modifées par caoutchouc et composites ainsi produits

(30) Priority: 31.12.1996 US 775661; 31.12.1996 US 775557
(43) Date of publication of application: 01.07.1998
(73) Proprietor: DOW CORNING CORPORATION, Midland, Michigan 48686-0994 (US); MASSACHUSETTS INSTITUTE OF TECHNOLOGY, Cambridge, MA 02139 (US)
(72) Inventor: Katsoulis, Dimitris Elias, Midland, Michigan 48640 (US); Keryk, John Robert, Midland, Michigan 48640 (US); McGarry, Frederick Jerome, Weston, Massachusetts 02193 (US); Schmidt, Randall Gene, Midland, MI 48642-3394 (US); Subramaniam, Ramnath, St Paul, MN 55101 (US); Vincent, Harold Lewis, Midland, Michigan 48640 (US); Zhu, Bizhong, Somerville, New Jersey 02143 (US)
(74) Representative: Lewin, John Harvey

(56) References cited:
- EP-A- 0 530 502
- US-A- 5 268 433

## Description

This invention provides silicone resins having silicone rubbers incorporated into their structure. The rubber-modified silicone resins and reinforced composites produced therefrom show a marked improvement in fracture toughness.

The addition of rubber to organic polymer resins can increase the toughness thereof. Such systems are disclosed in Effects of Rubber Additions On The Fracture Toughness Of A Polyester Resin (Tetlow, P. D. et al. Proceedings of the Annual Technical Conference, 1979, Reinforced Plastics/Composites Institute The Society of the Plastics Industry, Inc. Vol. 34, 23F) and Crack Toughened Polyester Resin Formulations (McGarry, F. J. et al., American Chemical Society Division of Organic Coating and Plastics Chemistry Vol. 28, No. 1, pp 526 - 36) presented in San Francisco in April, 1968.

The state of the art for increasing the toughness of various silicone compositions is disclosed in U.S. Patent 5,034,061 which teaches a silicone resin/fluid polymer adapted to form a transparent, shatter-resistant coating. The composition includes a silicone resin copolymer consisting essentially of R₃SiO_{1/2} and SiO_{4/2} units with unsaturated olefinic functional R groups, a polydiorganosiloxane fluid with vinyl functionality, an organopolysiloxane crosslinker having hydrogen functionality and a catalyst. The composition is disclosed as being particularly adapted for use in coating incandescent glass lamps.

Canadian Patent 691,206 describes the use of silica-filled silicone resin/fluid combinations for damping vibrations. The ability of the disclosed silicone resin/fluid compositions to dampen vibrations is illustrated through the measurement of the ratio of G', the elastic shear modulus, to G", the loss shear modulus. The magnitude of this ratio is indicated as being inversely proportional to the ability of the material to absorb vibration. The ratio of G'/G" of the subject materials is compared to that of compositions prepared without a resin constituent.

The above-described toughened silicone compositions have a low modulus of elasticity. Heretofore, successfully increasing the fracture toughness of rigid silicone resins has not been accomplished. As used herein to describe silicone resins, the term "rigid" means that the resin material, in its unfilled condition, exhibits a certain "stiffness" produced by having a Young's modulus of at least 6.9 X 10⁸ Pa. As used herein, the term "unfilled" means that no reinforcing fillers, such as carbon, glass fibers or silica are added to the resin.

Rigid silicone resins are used in applications that take advantage of their heat- and fire-resistant properties. These properties make the silicone resins useful in fiber-reinforced composites for electrical laminates, structural use in automotive components, aircraft and naval vessels. The unmodified rigid silicone resins of the prior art are quite brittle which severely limits their use. Thus, there is a need for rigid silicone resins having substantial increased fracture toughness which would permit the exploitation of the unique fire, electrical and heat-resistant properties in applications where brittle failure must be avoided.

EP-A-0 530 502 discloses a silicone rubber elastic material comprising a vinyl-terminated dimethyl polysiloxane and a resinous organopolysiloxane.

US-A-5 268 433 discloses a highly damping silicone composition comprising an organopolysiloxane copolymer, an organohydrogenpolysiloxane and an addition reaction catalyst.

We have discovered rubber-modified rigid silicone resins having improved fracture toughness. The present invention provides a rubber-modified rigid silicone resin comprising a copolymerized reaction product of:
(A) an organosilicon composition selected from:
   (I) a silsesquioxane organosilicone resin of the formula

      R¹ ₐR² _{b}R³ _{c}SiO_{(4-a-b-c)/2}

      wherein: a is a positive numerical value, b and c are zero or positive numerical values with the proviso that
      0.8 ≤ (a + b + c) ≤ 1.6, R¹, R² and R³ are monovalent radicals independently selected from hydrogen atoms, hydroxyl, alkyl, alkenyl, alkoxy, oximo, alkyloximo, aryloximo, aryl, alkylepoxide, arylepoxide, alkylcarboxyl, arylcarboxyl, alkylether, arylether, alkylamide, arylamide, alkyl amino and arylamino radicals;
   (II) hydrolyzable precursors of (I);
   (III) hydrolyzates formed from (II); and
(B) a silicone rubber of the formula:

   (R⁴ ₍₃₋ₚ₎R⁵ ₚSiO_{1/2}) (R⁴ ₂SiO_{2/2})ₓ (R⁴ ₍₃₋ₚ₎R⁵ ₚSiO_{1/2})

   wherein each R⁴ is a monovalent radical independently selected from alkyl or aryl radicals, each R⁵ is a monovalent radical independently selected from hydrogen atoms, hydroxyl, alkenyl, alkoxy, oximo, alkyloximo, aryloximo, alkylepoxide, arylepoxide, alkylcarboxyl, arylcarboxyl, alkylamide, arylamide, alkyl amino and arylamino radicals, p is 1, 2 or 3, and x is from 6 to 1000;
   and said component (B) being present in an amount from 2 weight percent to 30 weight percent of the combined weights of components (A) and (B), such that said rubber-modified silicone resin has a Young's modulus of at least 6.9 x 10⁸ Pa.

The novel rubber-modified rigid silicone resins of this invention are produced by copolymerization. The copolymerization is conducted via condensation reaction, addition reaction or free radical polymerization.

When the copolymerization is conducted via a condensation reaction, final cure of the resin is accomplished after copolymerization by heating. This causes further condensation between the copolymerized molecules.

Thus, our invention includes a method of producing a rubber-modified rigid silicone resin, comprising the steps of:
(1) dissolving in an organic solvent the following components, said components comprising:
   (A) an organosilicon composition selected from the group consisting of:
      (I) an organosilicone resin of the empirical formula

         R¹ ₐR² _{b}R³ _{c}SiO_{(4-a-b-c)/2}

         wherein: a is a positive numerical value, b and c are zero or positive numerical values with the proviso that
         0.8 ≤ (a + b + c) ≤ 1.6, R¹, R² and R³ are monovalent radicals independently selected from the group consisting of hydrogen atoms, hydroxyl, alkyl, alkenyl, alkoxy, oximo, alkyloximo, aryloximo, aryl, alkylepoxide, arylepoxide, alkylcarboxyl, arylcarboxyl, alkylether, arylether, alkylamide, arylamide, alkyl amino and arylamino radicals;
         said organosilicone resin having been formed by the hydrolysis and condensation of (II) hydrolyzable precursors of (I);
      (II) hydrolyzable precursors of (I);
      (III) an hydrolyzate formed from (II); and
   (B) a silicone rubber of the empirical formula:

      (R⁴ ₍₃₋ₚ₎R⁵ ₚSiO_{1/2})(R⁴ ₂SiO_{2/2})ₓ (R⁴ ₍₃₋ₚ₎R⁵ ₚSiO_{1/2})

      wherein each R⁴ is a monovalent radical independently selected from alkyl or aryl radicals, each R⁵ is a monovalent radical independently selected from the group consisting of hydrogen atoms, hydroxyl, alkenyl, alkoxy, oximo, alkyloximo, aryloximo, alkylepoxide, arylepoxide, alkylcarboxyl, arylcarboxyl, alkylamide, arylamide, alkylamino, arylamino, and p is 1, 2 or 3, and x is from 6 to 1000; and
(2) adding a condensation catalyst;
(3) copolymerizing all of component (B) with component (A), without causing precipitation of the copolymerized product from solution or the gelation thereof;
(4) devolatilizing the copolymerized solution; and
(5) heating said devolatilized, copolymerized solution to a temperature sufficient to cause cure.

It is therefore an object of our invention to provide a rubber-modified silicone resin having a Young's modulus of at least 6.9 X 10⁸ Pa in the unfilled condition.

It is another object of our invention to provide such a resin that, in the unfilled condition has increased fracture toughness, as measured by K_{ic}; increased critical strain energy release rate, as measured by G_{ic}; and integrated stress-strain toughness, compared to said silicone resin in its unmodified and unfilled condition.

Still another object of our invention is to provide a method of producing such a resin satisfying the above criteria.

It is a feature of our invention that the values of K_{Ic} and G_{Ic} of the rubber-modified silicone resin are increased over 25%, as compared to the silicone resin in its unmodified and unfilled condition.

Our rubber-modified rigid silicone resin comprises a copolymer formed from: (A) an organosilicon composition selected from the group consisting of (I) an organosilicone resin, (II) hydrolyzable precursors of (I); and (III) an hydrolyzate formed from (II); and (B) a silicone rubber.

The organosilicone resin (I) has the empirical formula

R¹ ₐR² _{b}R³ _{c}SiO_{(4-a-b-c)/2}

wherein a is a positive numerical value, b and c are zero or positive numerical values with the proviso that 0.8 ≤ (a + b + c) ≤ 1.6, and each R¹, R² and R³ are monovalent radicals independently selected from the group consisting of hydrogen atoms, hydroxyl, alkyl, alkenyl, alkoxy, oximo, aryl, alkylepoxide, arylepoxide, alkylcarboxyl, arylcarboxyl, alkylether, arylether, alkylamide, arylamide, alkyl amino and arylamino radicals.

The organosilicone resin (I) of composition (A) is a silsesquioxane and is made in a known manner by the hydrolysis and condensation of hydrolyzable precursors (II) of (I), which include the aforementioned R¹, R² and R³ groups as a part of their structure. Such hydrolyzable precursors include trifunctional silanes, such as organotrialkoxysilanes and organotrihalosilanes, which produce the desired three dimensional resin structure; or monofunctional silanes, such as triorganomonoalkoxysilanes, triorganomonohalosilanes, disiloxanes and disilazanes, which act as endcappers. Those skilled in the art will also appreciate that difunctional silanes, such as diorganodihalosilanes and diorganodialkoxysilanes, and small amounts tetrafunctional silanes, such as tetrahalosilanes and tetraalkoxysilanes, are also useful as resin precursors.

In our preferred embodiment, the majority of the R¹, R² and R³ groups are nonfunctional. Thus, those groups do not participate in the copolymerization reaction to produce the claimed rubber-modified rigid silicone resin herein and are alkyl groups, aryl groups or a combination thereof. Most preferably, these groups are methyl, phenyl, or combinations thereof.

The second component of the present invention is (B) a silicone rubber of the empirical formula:

(R⁴ ₍₃₋ₚ₎R⁵ ₚSiO_{1/2})(R⁴ ₂SiO_{2/2})ₓ(R⁴ ₍₃₋ₚ₎R⁵ ₚSiO_{1/2})

wherein each R⁴ is a monovalent radical independently selected from alkyl or aryl radicals, each R⁵ is a monovalent radical independently selected from the group consisting of hydrogen, hydroxyl, alkenyl, alkoxy, oximo, alkyl oximo, aryloximo, alkylepoxide, arylepoxide, alkylcarboxyl, arylcarboxyl, alkylamide, arylamide, alkyl amino and arylamino radicals, p is 1, 2 or 3, and x is an integer from 6 to 1000.

It is important to note that the R⁴ groups denote only alkyl and aryl groups. Hence, the R⁴ groups do not participate in the copolymerization reaction. Each R⁵, however, is a functional group which does participate in the copolymerization reaction to form the copolymer of this invention.

In the formula for (B), x represents the average nonfunctional linear chain length of the silicone rubber, i.e. the average chain length between R⁵ groups. Hence, a mixture of silicone rubbers (B) of various degrees of polymerization can still be represented by the above empirical formula. Most silicone rubbers used in connection with the present invention have R⁵ groups only at the terminal groups of the chain. In such instances, the term "degree of polymerization" ("DP") is the value of x. However, the term DP does not include the terminal functional siloxy groups.

In the preferred embodiment, the R⁴ groups are methyl groups, phenyl groups or a combination thereof.

We have found that, when a high percentage of the R¹, R² and R³ groups of the organosilicon composition (A), and the R⁴ groups of the silicone rubber (B) are either predominantly methyl or predominantly phenyl, the organosilicon composition (A) and the silicone rubber (B) are compatible, permitting the rubber to be dispersed throughout the resin structure in a homogeneous manner.

We also have found that when the DP of the silicone rubber (B) becomes relatively large, e.g. between 55 and 200, the rubber tends to segregate from the resin, resulting in the formation of a distinct two phase system. In formulating compositions of our invention, the organosilicon composition (A) and rubber (B) are dissolved in an organic solvent at relatively low solids concentration (i.e. from extremely dilute to 30%, by weight.) At higher concentrations, it is very difficult to form a homogeneous solution of an organosilicon composition (A) in the form of a resin (I) and rubber (B).

Segregation into a two phase system was sometimes observed in the cured, rubber-modified resin matrix, even though such segregation was not noted in the organic solution from which it was formed. In certain instances such post-curing segregation may enhance the mechanical properties of the rubber-modified resin of our invention. Indeed, it is possible to utilize silicone rubber (B) having a DP as high as 1,000.

In our invention, component (B) is present in an amount from 2 weight percent to 30 weight percent of the Combined weights of components (A) and (B) such that the cured rubber-modified rigid silicone resin has a Young's modulus of at least 6.9 X 10⁸ Pa. We have surprisingly discovered that the Young's modulus of the rubber-modified silicone resins of our invention decreases with increasing rubber content. Thus, the relative quantities of the organosilicon composition (A) and rubber (B) are selected such that the rigidity of the cured resin is not compromised to the extent that it cannot be satisfactorily used for structural applications. The type of silicone rubber and the use of crosslinkers also affects the Young's modulus of our modified resins. In most instances, however, silicone rubber additions in excess of 30 wt% of the modified resin result in a composition having a Young's modulus less than that stipulated above. Likewise, the beneficial effects of increased toughening are not realized unless at least 2 wt% of silicone rubber (B) is used.

In one embodiment, the organosilicon composition (A) is an organosilicone resin (I) which is first formed to the desired molecular weight before copolymerization with silicone rubber (B). It is preferable to first blend the resin (I) with the silicone rubber (B) in an organic solvent, such as toluene, along with the desired amount of crosslinker and a catalytic amount of a catalyst. The composition is devolatilized, cast into a mold and thereafter thermally cured. In some instances, devolatilization can take place in the mold. If devolatilization is carried out at an elevated temperature, the addition of the curing catalyst is usually made after cooling.

In another embodiment, the composition may be injection molded after the devolatilization step.

In invention compositions which utilize condensation reactions between the organosilicon composition (A) and rubber (B), it is possible to first selectively copolymerize the organosilicon composition (A) molecules and the rubber (B) molecules, with one another, before carrying out a final cure.

For example, an organosilicon composition (A) in the form of a resin (I) and the silicone rubber (B) are dissolved in an organic solvent, such as toluene, along with the desired amount of a crosslinker, if any, and a condensation catalyst. It is preferred to use a relatively weak condensation catalyst such as titaniumtetrabutoxide. At a temperature of 90°C., this relatively weak catalyst triggers the copolymerization between the organosilicon composition (A), the rubber (B) and the cross-linker, if any, without causing homopolymerization between organosilicon composition (A) or rubber (B). The reaction is preferably carried out to the extent that all of the rubber (B) molecules are copolymerized with the organosilicon compound (A)molecules. This result was confirmed utilizing ²⁹Si nuclear magnetic resonance spectroscopy (NMR).

Alkoxides of zirconium and hafnium would likewise function as relatively weak condensation catalysts.

Under the above conditions, some homopolymerization may take place. However, substantial homopolymerization does not occur because the formed copolymer remains soluble and stable in the organic solvent. This "light" copolymerization is similar to light bodying. Light copolymerization is controlled by the concentration of the catalyst, relative to its catalytic strength, and the temperature at which the light copolymerization is conducted.

The copolymer in the "lightly" copolymerized state will remain in solution. Thereafter, a strong condensation catalyst, such as Dow Corning® catalyst 15, or Y-177, choline octoate and zinc octoate catalysts, respectively, (both of which are commercially available from the Dow Corning Corporation, Midland MI,) are added to the "lightly copolymerized" solution. The solution is then cast, devolatilized and finally cured to a rigid state by the application of heat. Often, final curing is augmented by the application of pressure. In the condensation cure system, the final cure is accomplished through the condensation of residual silanol groups associated with the resin (I).

When the silicone rubber (B) contains hydrolyzable or condensable R⁵ groups, the rubber (B) is blended with the hydrolyzable precursors (II) of the organosilicone resin (I), or (III) a partial hydrolyzate of (II), which is then followed by a hydrolysis/condensation reaction to complete the light copolymerization step and to cause growth of the resin network molecules. The light copolymerization step is catalyzed with a relatively weak catalyst, as above, until the composition reaches a desired viscosity for casting. Thereafter, the composition is devolatilized and an appropriate strong condensation catalyst is added. The material is then cast and finally thermally cured.

Regardless of the route used to obtain the rubber-modified silicone resin of this invention, the cured composition exhibits the desired rigidity and increased fracture toughness.

The copolymer of our invention is formed with or without the aid of a crosslinker and, in the case of condensation cured compositions, with or without the aid of a catalyst.

The type of cure mechanism used to obtain the copolymer of our invention includes those generally referred to as a condensation-cure systems, addition-cure systems and free radical polymerization systems.

In systems incorporating alkenyl groups, such as vinyl groups, to impart reactive functionality to the silicone resin (I)and the silicone rubber (B), free radical polymerization is a viable cure system. A free radical initiator, such as a peroxide, is normally employed. Commonly used initiators include aryl peroxides. A well-known vinyl-specific peroxide initiator is (CH₃)₃COOC(CH₃)₃.

For condensation-cure systems, metal esters or alkoxides of tin, titanium and zinc are preferred catalysts. Titanium tetrabutoxide, dibutyl tin dilaurate and zinc octoate are well-known examples. Tin catalysts, however, may decrease the thermal stability of the cured rubber-modified rigid resins of this invention and are generally avoided for high temperature applications. Even less preferred but still usable are strong acids and bases, such as sulfuric acid, phosphoric acid, potassium hydroxide, cesium hydroxide, metal silanolates and calcined lime. These latter catalysts, however, may also compromise the thermal stability of cured rigid silicone castings. Also useful are amine or metal carboxylates and quaternary bases. Certain quaternary bases, such as tetramethyl ammonium hydroxide, are advantageous because they decompose to volatile by-products when heated to curing temperatures. Thus, they are readily removed from the silicone resin/rubber copolymer matrix of the invention.

Care must be taken when volatile by-products are formed by the cure mechanism. Such volatile by-products may cause a considerable reduction in toughness by the formation of bubbles, which act as casting defects.

For addition-cure systems, the platinum-group catalysts, such as chloroplatinic acid, are frequently used. In fact, suitable platinum catalysts include platinum compounds or complexes. In addition to chloroplatinic acid, chloroplatinic acid hexhydrate, Karstedt's catalyst (i.e. a complex of chloroplatinic acid with sym-divinyltetramethyldisiloxane), dichlorobis(triphenylphosphine)platinum(II), platinum chloride and platinum oxide are used.

In condensation curing systems, copolymerization between a silicone resin (I) and silicone rubber (B) and the final cure of the copolymerized system, is induced in the absence of a catalyst. However, such reactions require the application of high temperatures and for this reason are not preferred. Also, the light copolymerization described above is not accomplished without the aid of a catalyst.

Suitable crosslinkers for practicing this invention include those well known in the production and curing of silicone rubbers. These crosslinkers are silicon-based, meaning their chemical formulae include at least one silicon atom. Tetraethoxysilane, methyltrimethoxysilane and methyltriacetoxy-, methyltrioximo- and tetraoximosilane are well-known examples. Crosslinkers include relatively short siloxy chains between reactive functional groups. As used herein, the term "crosslinker" is limited to silanes and to such siloxanes wherein the DP of the siloxy chain is less than six.

The use of acid hydrolysis and condensation to form organosilicone resins y results in a resin composition having a significant concentration of nonsterically-hindered residual hydroxyl groups. Thus, condensation reactions using the residual hydroxy functionality of the resin is a convenient way to form the copolymer of our invention through a condensation cure system.

The fracture-resistant silicone resin compositions of the invention are expected to have great utility in the manufacture of structural or load-bearing components. Furthermore, the compositions of our invention are very advantageously used as the continuous phase in composite materials, such as fiber-reinforced rubber-modified rigid resins.

The compositions of the invention may be put to many other uses. For instance, solutions comprising the lightly copolymerized organosilicon composition (A) and rubber (B), in an organic solvent form a curable coating composition over a substrate, which functions as an adhesive. Likewise, the compositions of this invention may be cured into the form of films or sheet products.

### EXAMPLES - RESINS WITHOUT REINFORCING SECOND PHASE

### Condensation Cure System

A first resin (designated herein as RES1) was modified with four different types of silicone rubber (designated herein as RUB1, RUB2, RUB3 and RUB4) at various weight percents up to a maximum of 20 weight percent. The various compositions were prepared in toluene, as described below, cast into square, Teflon®-lined aluminum molds, devolatilized under vacuum at 110°C., and cured via the following schedule: 95°C. for 48 hours; 110°C. for 24 hours; 120°C. for 24 hours; 130°C. for 24 hours; 140°C. for 24 hours; 150°C. for 12 hours; 175°C. for 6 hours; 200°C. for 12 hours; 230°C. for 3 hours; and 260°C. for 5 hours. This curing schedule assured the cured slabs were free of defects such as cracks and bubbles.

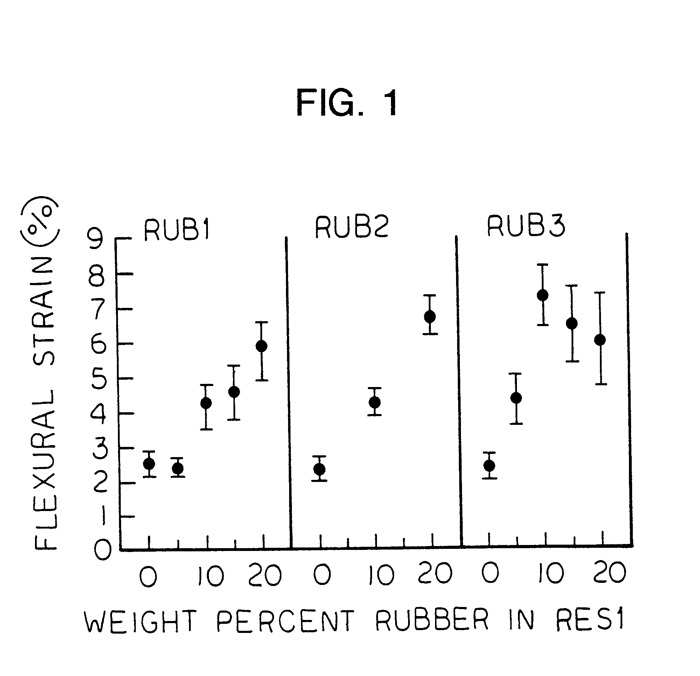

Specimens taken from the cured slabs were subjected to three point bending until fracture in accordance with ASTM D 790, and the flexural strength, strain, Young's modulus and the integrated stress-strain toughness were plotted as a function of weight percent silicone rubber. (See Figs. 1 - 4.)

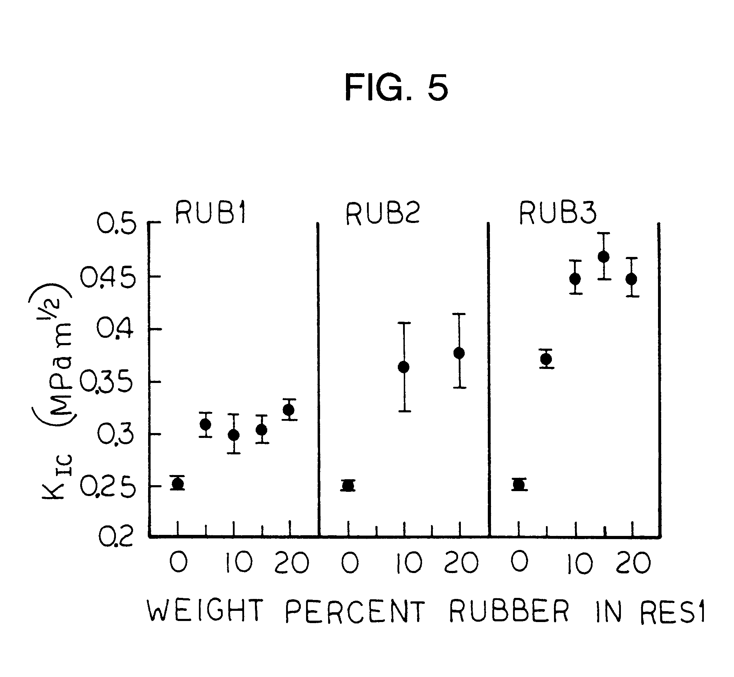

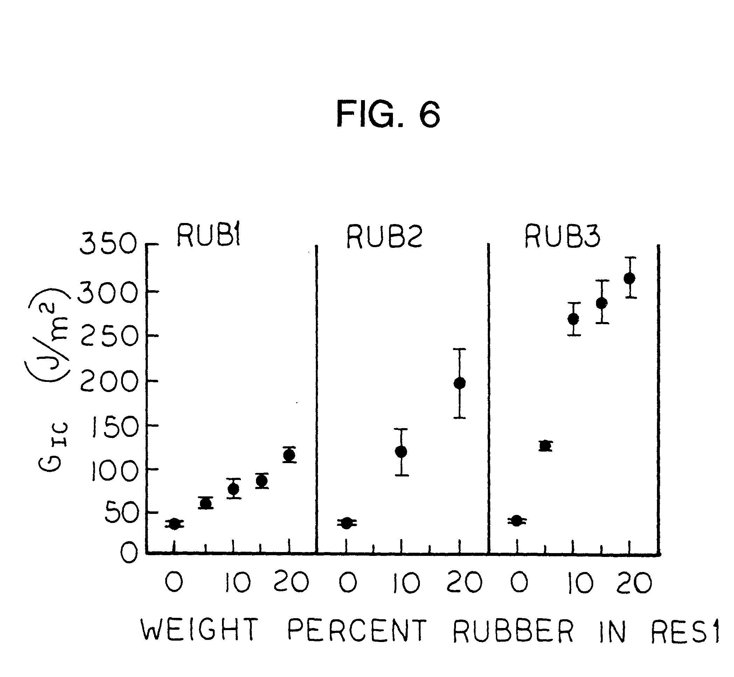

Specimens taken from the cured slabs were likewise prepared and tested in accordance with ASTM D 5045, in the single edge notch three point bending mode, and the fracture toughness, K_{ic}, and critical strain energy release rate, G_{Ic}, were determined as a function of weight percent silicone rubber. (See Figs. 5 and 6.)

RES1 was a silsesquioxane resin (commercially from Dow Corning® 4-3136, Dow Corning Corporation, Midland MI) having the following empirical formula:

(MeSiO_{3/2})_{0.45}(PhSiO_{3/2})_{0.40}(Ph₂SiO_{2/2})_{0.10}(PhMeSiO_{2/2})_{0.05}

and an Mn, number average molecular weight, of 1,300 or less, where Me and Ph represent, and hereafter denote methyl and phenyl groups, respectively. The resin is available in the form of a solid flake.

As previously mentioned, silsesquioxane resins formed by acid hydrolysis/condensation generally include a substantial quantity of nonsterically-hindered hydroxyl groups. The above empirical formula ignores such residual hydroxyl groups (sometimes referred to as residual silanol groups). Because these groups are the reactive groups responsible for copolymerization in our invention, the above formula may be rewritten in the approximate empirical form, accounting for the residual hydroxyl groups, as follows:

Me_{0.69}Ph_{0.43}(OH)_{0.025}SiO_{1.43}.

Each of the various rubbers, RUB1, RUB2, RUB3 and RUB4, were prepared in an identical manner. A dimethylsilanol-terminated polydiorganosiloxane, having a predetermined desired average degree of polymerization (DP), was reacted with a stoichiometric excess of tetraethylorthosilicate in the presence of a potassium acetate catalyst at a temperature between 130 and 150°C., with constant removal of volatiles. Heating was continued until ²⁹Si nuclear magnetic resonance spectroscopy (NMR) showed complete triethoxy conversion of the terminal hydroxyl groups. Unreacted tetraethylorthosilicate was removed by vacuum stripping and heating.

RUB1, RUB2, RUB3 and RUB4 had, respectively, a DP of 6, 14, 55 and 376.

The modification of RES1 was carried out by dissolving sufficient quantities of RES1 and a given silicone rubber (B) at the desired ratios in toluene. In the case of RUB1 and RUB2, a solution of 50 weight percent solids was used. In the case of RES1 and RUB3, a maximum solids content of 38 wt% was used, due to limited compatibility between the higher DP rubber and resin. Likewise, in the case of RES1 and RUB4, a maximum solids content of 20 wt% was used, for the same reason. A relatively weak condensation catalyst, in the form of titanium tetrabutoxide catalyst, at a concentration between 0.1 and 1.0 wt% was thereafter added. The temperature of the reaction mixture was thereafter raised to 90°C. for 3 hours, followed by heating to reflux for 25 hours to lightly copolymerize the RES1 and various rubbers (B). The solution was then stripped to 50 - 65 wt% solids, cooled to room temperature, and next 0.20 wt% of a relatively strong condensation catalyst (either Dow Corning® catalyst 15 or Y-177) was added. This solution was then devolatilized and cast into slabs and cured as above.

Finally, RES1 was copolymerized with a combination of RUB3 and RUB4. Both RUB3 and RUB4 were used at a concentration of five wt% each, the balance being RES1. This composition was prepared by blending equal parts (solids) of independently prepared lightly copolymerized combinations of RES1 with 10 wt% RUB3 and RES1 with 10 wt% RUB4, in toluene. Thereafter, this solution was then devolatilized and cast into slabs and cured as described above.

### Addition Cure System

A second resin, RES2, a vinyl-functional silsesquioxane resin, was modified with a dimethylvinylsiloxy-terminated polydimethylsiloxane having an average DP of 9, RUB5, at various weight percents up to a maximum of 15 wt%.

RUB5 is a commercially available product from Gelest, Inc. of Tulleytown, PA, and sold under the designation DMS-V05.

RES2 was prepared in a known manner from the acid-catalyzed (HCl) hydrolysis/condensation of phenyltrichlorosilane. The reaction product was then washed of acid and further bodied in the presence of potassium hydroxide. The polymerization was terminated by end-capping through the addition of a toluene solution of dimethylvinylchlorosilane. The potassium hydroxide was neutralized and filtered from solution and the resin concentrated to 75 wt% solids, by weight. The RES2 molecules had an Mn from 1350 to 1415.

The empirical formula of RES2 is described as follows:

(PhSiO_{3/2})_{0.75}(ViMe₂SiO_{1/2})_{0.25}

or, in accordance with the empirical formula:

Ph_{0.58}Me_{0.54}Vi_{0.27}SiO_{1.31}

wherein Vi represents, and hereafter denotes vinyl groups.

Two different methods were employed to carry out the rubber modifications of RES2. In both methods a stoichiometric excess of SiH-functional crosslinker was employed. In the first method, the crosslinker was trifunctional, being phenyltris(dimethylhydrogensiloxy)-silane (commercially available from United Chemical Technologies, Inc.) In the second method, the crosslinker was tetrafunctional, being tetrakis(hydrogendimethylsiloxy)-silane.

The various compositions were prepared in the toluene solution of RES2 by dissolving RUB4 at the desired ratios therein. Afterward, a stoichiometric excess of the cross-linkers were respectively added. The resulting solution was vacuum degassed for 1 1/2 hours at 50°C. The solution was cooled to room temperature and a catalytic amount (1 to 100 ppm, by weight) of hexachloroplatinic acid was added thereto. The resulting composition was cast into Teflon@-lined, square aluminum molds and cured at 140 to 160°C. for 16 hours, removed from the mold and post-cured between 200 - 260°C. for 4 to 8 hours. No cracking was observed during composition cure employing the trifunctional crosslinker. Some cracking was observed during curing of the compositions employing the tetrafunctional crosslinker. It was found, however, that the use of lower curing temperatures helped to reduce such cracking.

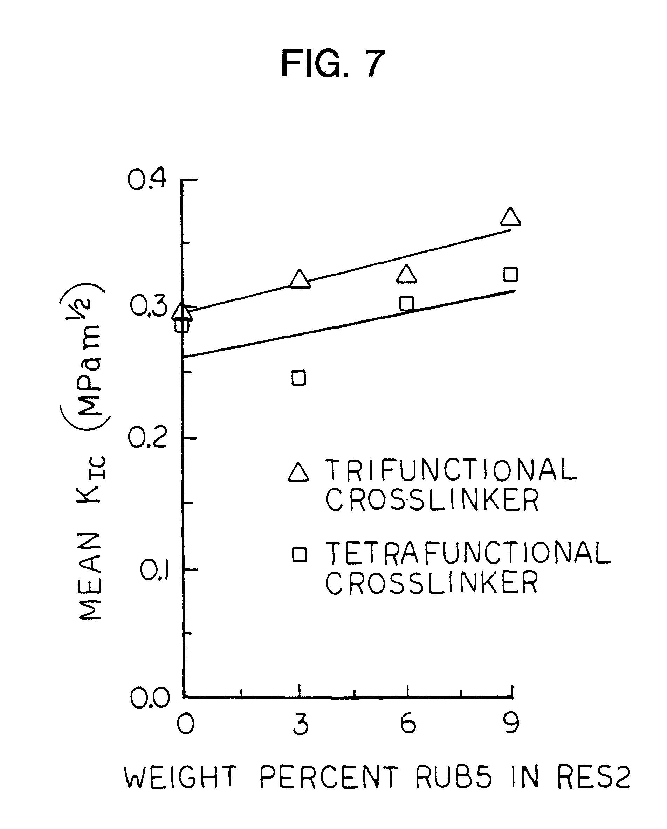

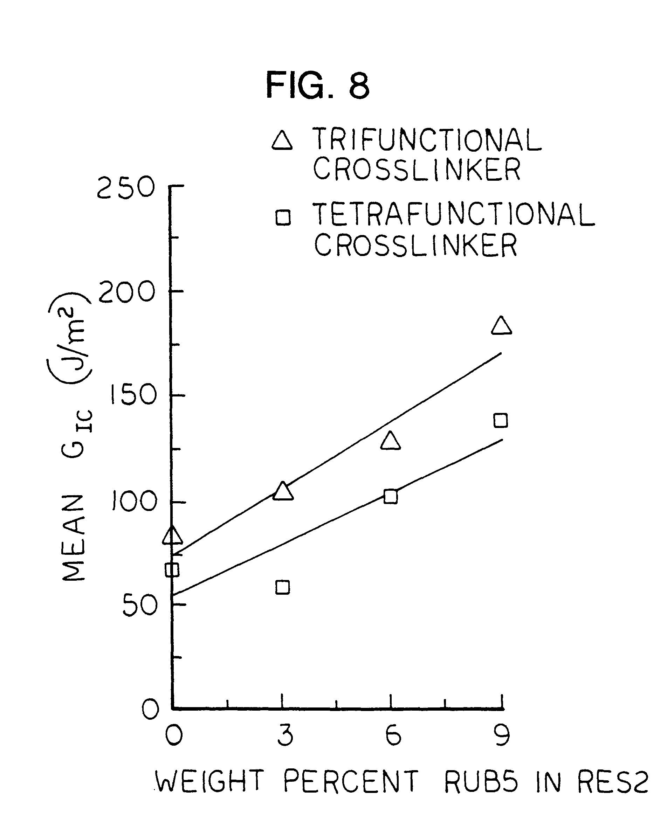

Specimens taken from cured slabs were likewise prepared and tested in accordance with ASTM D 5045 in the single edge notch bending mode and the fracture toughness, K_{Ic}, and critical strain energy release rate, G_{Ic}, were determined. (See Figs. 7 and 8)

### Condensation Cure System

The results obtained from the above testing are graphically illustrated in the Figs. 1 through 8. The modification of RES1 with RUB5 is the only example wherein the results are not so illustrated. In Figs. 1 through 6, the center point represents the arithmetic mean value of the tested parameter and the vertical bar shows the spread of data. Approximately five to six test specimens were used at each level of rubber loading.

Fig. 1 is a graph of the Flexural Strain (%) at fracture (derived from three point bending per ASTM D 790) as a function of weight percent silicone rubber for RES1, a methylphenylsilsesquioxane resin modified with three different silicone rubbers (RUB1, RUB2 and RUB3) having three different degrees of polymerization, which modifications were accomplished using a condensation reaction.

Fig. 2 is a graph of the Flexural Stress, at fracture, of the silicone rubber-modified resins of Fig. 1, as a function of weight percent silicone rubber.

Fig. 3 is a graph of the Toughness of the silicone rubber-modified resins of Fig. 1, as a function of weight percent silicone rubber and as measured by the area under the stress-strain curve.

Fig. 4 is a graph of the Young's Modulus of the silicone rubber-modified resins of Fig. 1, as a function of weight percent silicone rubber.

Fig. 5 is a graph of the fracture toughness, R_{Ic}, of the silicone rubber-modified resins of Fig. 1, as determined by ASTM D 5045 and shown as a function of weight percent silicone rubber.

Fig. 6 is a graph of the critical strain energy release rate, G_{Ic}, of the silicone rubber-modified resins of Fig. 1, as determined in accordance with ASTM D 5045 and shown as a function of weight percent silicone rubber.

Fig. 7 is a graph of the fracture toughness, K_{Ic}, determined by ASTM D 5045 of RES2, of a vinyl-functional silsesquioxane resin, modified with RUB5, a dimethylvinylsiloxy-terminated polydimethylsiloxane, which modification was accomplished using a crosslinker and addition curing, and shown as a function of weight percent silicone rubber.

Fig. 8 is a graph of the critical strain energy release rate, G_{Ic}, of the silicone rubber-modified resin of Fig. 7, as determined using ASTM D 5045 and shown as a function of weight percent silicone rubber.

Referring to Fig. 1, when the silicone rubber has a relatively low DP, as in RUB1 and RUB2 (DP = 6 and 14, respectively), greater additions of silicone rubber results in greater strains at fracture. However, when the DP of the silicone rubber is somewhat higher, as in RUB3 (DP = 55) the flexural strain at fracture reaches a peak at 10 wt% silicone rubber.

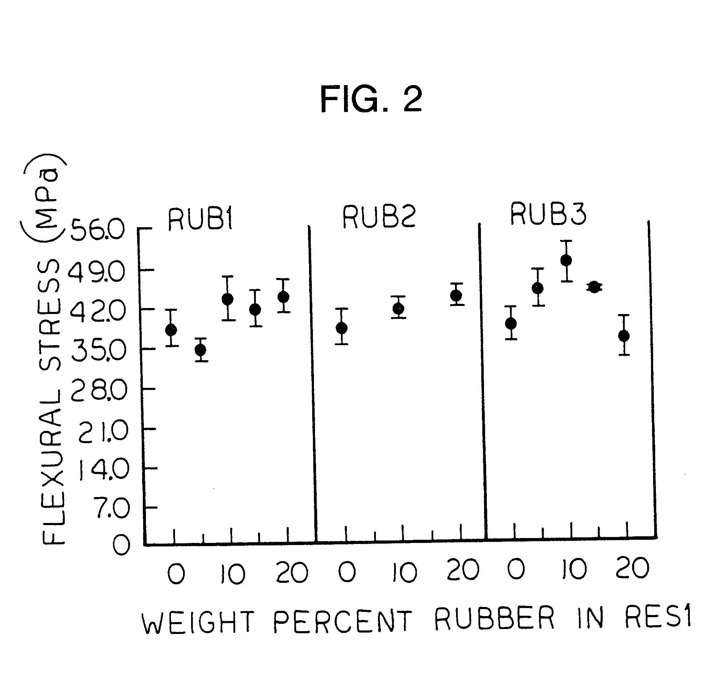

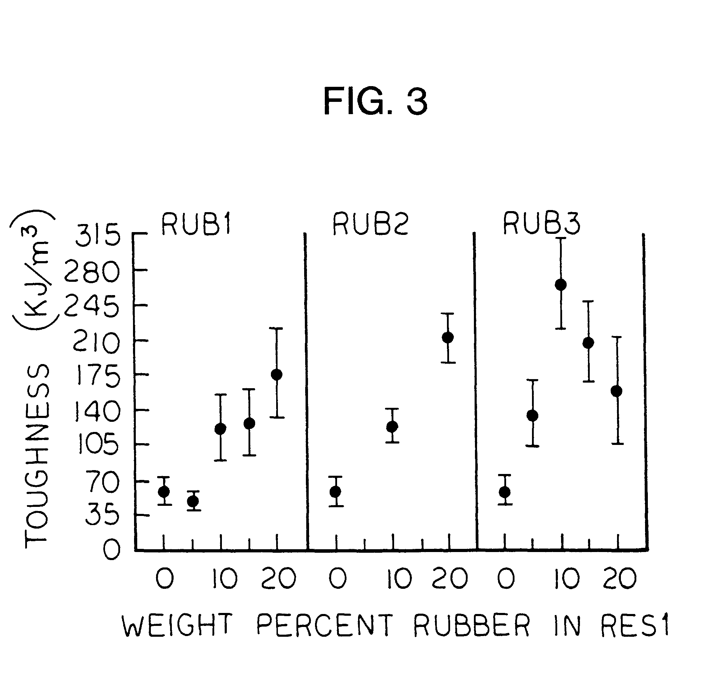

Referring to Fig. 2 the flexural stress at fracture, as a function of silicone rubber content, behaves in a manner analogous to that of the strain. Fig. 3 similarly shows that the toughness, as measured by the integrated stress-strain as a function of rubber content also follows the same trends.

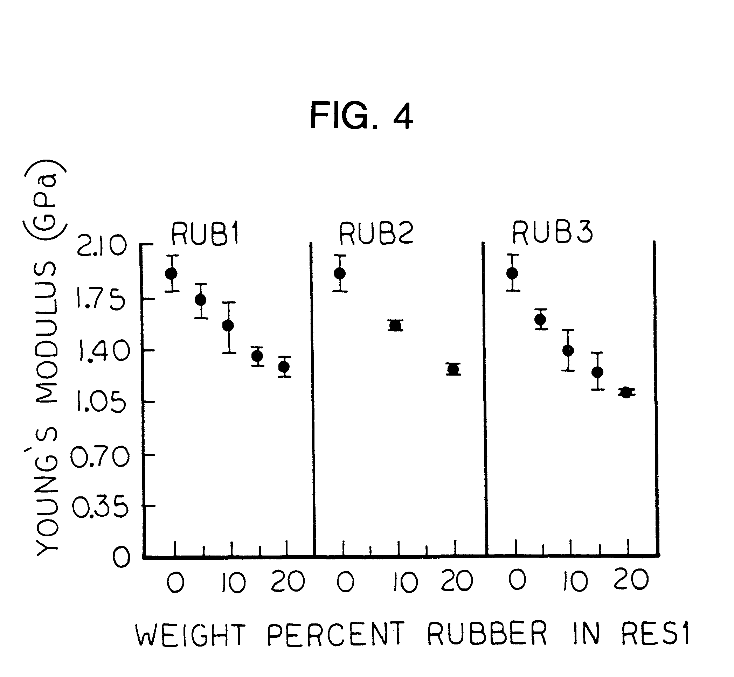

Fig. 4 illustrates that in all instances, regardless of the DP of the rubber used in the copolymer of our invention, any increase in the rubber content of the copolymer will result in a decrease in Young's modulus, or the "stiffness" of the composition. Our invention improves the fracture toughness of rigid silicones used for making structural components. Hence, only rubber-modified silicone resins having a Young's modulus of at least 6.9 X 10⁸ Pa are considered to posses the requisite rigidity for such applications.

Fig. 5 shows the fracture toughness, K_{Ic}, of RES1 was modestly increased by copolymerization with silicone rubbers having a relatively low DP, such as RUB 1 (DP = 6). Copolymerization with silicone rubbers having a greater DP, such as RUB2(DP=14) had a considerably greater effect on the fracture toughness of RES1. Finally, when copolymerization is carried out with a silicone rubber having a higher DP, such as RUB3 (DP = 55), the value of K_{Ic}, as a function of weight percent silicone rubber, behaves in a manner similar to the properties of fracture strain, stress and toughness. A peak value for K_{Ic} results between 10 and 20 wt% RUB3.

Fig. 6 shows that regardless of the DP of the silicone rubber in the copolymer of our invention, the value of the critical strain energy release rate, G_{Ic}, of RES1 increased with increasing quantities of silicone rubber. Nonetheless, the rate of increase was highest when copolymerization was conducted with RUB3, which had the highest DP at 55.

The values of K_{Ic} and G_{Ic} of RES1 are higher when the resin was modified with silicone rubbers in accordance with our invention. Fig. 5 shows the K_{Ic} of unmodified RES1 is 0.25 MPam^{1/2}. When RES1 is copolymerized with 15 wt% RUB3, the value of K_{Ic} is 0.47 MPam^{1/2}. This represents an increase in fracture toughness of over 80% compared to the unmodified condition. Likewise, G_{Ic} increased from 38 J/m² to 260 J/m². This represents an increase in the critical strain energy release rate of over 585%.

An even more remarkable result of our invention is that the increases in K_{Ic} and G_{Ic} were accompanied by increases of 160% in the flexural strain at fracture, 32% in the flexural stress at fracture and 350% in integrated stress-strain toughness. These advantages were all obtained with only a minor reduction (21%) in Young's modulus. Accordingly, rigid silicone resins are unexpectedly modified in our invention to display much more ductile behavior, without a substantial loss in rigidity.

As previously mentioned, RES1 was copolymerized with RUB4, in accordance with the invention. RUB4 was present in the copolymerized product at 2 wt%. When subjected to mechanical testing, it was found that the silicone rubber-modified resin had a flexural strain at fracture of 3.65%, flexural stress at fracture of 44.4 MPa, a Young's modulus of 1.79 GPa, toughness of 108.4 KJ/m³, K_{Ic} of 0.29 MPam^{1/2} and G_{Ic} of 62.5 J/m². This represents an increase in fracture toughness of over 16% and an increase in the critical strain energy release rate of over 63% as compared to the unmodified RES1. Likewise, increases of 48% in the flexural strain at fracture, 16% in the flexural stress at fracture and 81% in integrated stress-strain toughness were observed. These benefits were obtained with only a minor reduction in the value of Young's modulus (i.e. less than 5%).

Also as previously mentioned, RES1 was copolymerized with a combination of RUB3 and RUB4. Both RUB3 and RUB4 were used at a concentration of 5 wt% each, the balance being RES1. When subjected to mechanical testing, the silicone rubber-modified resin had a flexural strain at fracture of 5.06%, flexural stress at fracture of 40.6 MPa, a Young's modulus of 1.34 GPa, integrated stress-strain toughness of 146.4 KJ/m³, K_{Ic} of 0.52 MPam^{1/2} and G_{Ic} of 282 J/m². Again, this represents an increase of 100% in K_{Ic} and an increase in the critical strain energy release rate G_{Ic} of over 600% as compared to the unmodified RES1. Likewise, increases of 106% in the flexural strain at fracture, 6% in the flexural stress at fracture and 145% in integrated stress-strain toughness were observed. These benefits were obtained with only a minor reduction in the value of Young's modulus (i.e. less than 29%.)

### Addition Cure System

Figs. 7 and 8 show the modification of RES2 with silicone rubber RUB5 also results in higher values of K_{Ic} and G_{Ic} with increasing quantities of rubber. The benefits derived therefrom were not, however, as remarkable as those obtained in the condensation-cure systems. Nonetheless, increases of 18% in the value of K_{Ic} and over 100% in G_{Ic} were observed.

RES2 and RUB5 were combined utilizing two different crosslinkers, which differed in hydrogen functionality. In each instance, a stoichiometric excess of the crosslinker was employed. The graphic data of Figs. 7 and 8, shows the trifunctional crosslinker has a greater effect on the values of K_{Ic} and G_{Ic} at a given content of RUB5. Accordingly, the effect of silicone rubber modification of resins may be influenced by crosslink density.

The interpretation of the above data with respect to crosslink density deserves further discussion. In the systems employed, both the resin, RES2, and the silicone rubber, RUB5, were vinyl functional and the crosslinkers were hydrogen functional. Thus, in the presence of the catalyst, the crosslinker was free to form bonds between: two or more RUB5 molecules with no RES2 molecules therebetween; two or more RES2 molecules with no RUB5 molecules therebetween; and RES2 molecules with RUBS molecules therebetween. The beneficial effects of the silicone rubber addition is not as pronounced because the resin-to-resin bonds formed by the crosslinker had the same effect as reducing the average DP of the silicone rubber.

### EXAMPLES - GLASS FABRIC COMPOSITE MATERIALS UTILIZING THE RUBBER-MODIFIED RIGID SILICONE RESINS OF THE INVENTION AS A CONTINUOUS PHASE

Composite materials are generally defined as including at least two phases: 1) a continuous matrix phase; and 2) a reinforcing phase. Reinforcing phases preferably consist of monofilaments, chopped fibers and woven cloths. The advantages of using the rubber-modified rigid silicone resins of our invention as the continuous phase in such a composite material were explored.

Two, 12-ply laminate composite structures were prepared from unfinished, (heat cleaned) woven E-glass fabric (Type 7781) and unmodified RES1 and RES1 modified with 10 wt% RUB3, respectively referred COMP1 and COMP2. The glass content of COMP1 was 63 wt%, and that of COMP2 was 59 wt%. The cured slabs had thicknesses ranging from 3.39 to 3.56 mm.

Mechanical testing was performed as previously described on specimens cut from the cured composite slabs. The results are set forth in Table I.

**Table I**

| | Flexural* Strain (%) | Flexural* Stress (MPa) | Young's Modulus (GPa) | Toughness** (KJ/m³) |
|---|---|---|---|---|
| RES1 (unmodified) | 2.17 | 169.52 | 10.53 | 246.55 |
| RES1 and 10% RUB3 | 2.80 | 250.32 | 11.95 | 437.02 |

| | | | | |
|---|---|---|---|---|
| *at fracture | | | | |
| **integrated stress-strain | | | | |

The results in Table I illustrate that the beneficial effects of our rubber-modified rigid silicone resins are still realized when the composition is utilized in the fabrication of a composite material.

## Claims

1. A rubber-modified rigid silicone resin comprising a copolymerized reaction product of:
(A) an organosilicon composition selected from:
(I) a silsesquioxane organosilicone resin of the formula
R¹ ₐR² _{b}R³ _{c}SiO_{(4-a-b-c)/2}
wherein: a is a positive numerical value, b and c are zero or positive numerical values with the proviso that
0.8≤ (a + b + c) ≤ 1.6, R¹, R² and R³ are monovalent radicals independently selected from hydrogen atoms, hydroxyl, alkyl, alkenyl, alkoxy, oximo, alkyloximo, aryloximo, aryl, alkylepoxide, arylepoxide, alkylcarboxyl, arylcarboxyl, alkylether, arylether, alkylamide, arylamide, alkyl amino and arylamino radicals;
(II) hydrolyzable precursors of (I);
(III) hydrolyzates formed from (II); and
(B) a silicone rubber of the formula:
(R⁴ ₍₃₋ₚ₎R⁵ ₚSiO_{1/2}) (R⁴ ₂SiO_{2/2})ₓ(R⁴ ₍₃₋ₚ₎R⁵ ₚSiO_{1/2})
wherein each R⁴ is a monovalent radical independently selected from alkyl or aryl radicals, each R⁵ is a monovalent radical independently selected from hydrogen atoms, hydroxyl, alkenyl, alkoxy, oximo, alkyloximo, aryloximo, alkylepoxide, arylepoxide, alkylcarboxyl, arylcarboxyl, alkylamide, arylamide, alkyl amino and arylamino radicals, p is 1, 2 or 3, and x is from 6 to 1000;
and said component (B) being present in an amount from 2 weight percent to 30 weight percent of the combined weights of components (A) and (B), such that said rubber-modified silicone resin has a Young's modulus of at least 6.9 x 10⁸ Pa.

2. A rubber-modified silicone resin of claim I wherein said rubber-modified silicone resin has a fracture toughness, as measured by K_{Ic}, that is at least 25% greater than the fracture toughness of the organosilicon composition (A) in its fully cured and unfilled state.

3. The rubber-modified silicone resin of claim 1 or claim 2 wherein said rubber-modified silicone resin has a critical strain energy release rate, as measured by G_{Ic}, that is at least 25% greater than the critical strain energy release rate of the organosilicon composition (A) in its fully cured and unfilled state.

4. A method of producing a rubber-modified rigid silicone resin having a Young's modulus of at least 6.9 x 10⁸ Pa, comprising the steps of;
(1) dissolving the organosilicone composition of claim 1 in an organic solvent at a solids concentration not greater than 30% by weight;
(2) adding a catalyst;
(3) copolymerizing all of component (B) with component (A) of claim 1, in the relative quantities specified in claim 1, without causing precipitation of the copolymerized product from solution or the gelation thereof;
(4) devolatilizing the copolymerized solution; and
(5) heating said devolatilized, copolymerized solution to a temperature sufficient to cause cure.

5. The method of claim 4 wherein said catalyst is a condensation catalyst.

6. The method of claim 5 wherein said condensation catalyst is selected from choline octoate or metal esters and alkoxides of tin, titanium and zinc.

7. The method of claim 4 wherein said catalyst is an addition catalyst.

8. The method of claim 7 wherein said addition catalyst is selected from platinum compounds and complexes.

9. The method of claim 8 wherein said copolymerization solution further comprises a silicon-based crosslinker.

10. The method of claim 4 wherein said copolymerized solution is obtainable by free-radical polymerization.

11. A composite comprising a continuous phase and reinforcing phase, **characterized in that** said continuous phase is the rubber-modified rigid silicone resin of Claim 1.

## Patentansprüche

1. Kautschukmodifiziertes steifes Siliconharz, enthaltend ein copolymerisiertes Reaktionsprodukt von:
(A) einer Organosiliciumzusammensetzung, ausgewählt aus:
(I) einem Silsesquioxanorganosiliconharz der Formel
R¹ ₐR² _{b}R³ _{c}SiO_{(4-a-b-c)/2},
worin a ein positiver numerischer Wert ist, b und c null oder positive numerische Werte sind, unter der Voraussetzung, dass 0,8≤(a+b+c)≤1,6, R¹, R² und R³ monovalente Reste, unabhängig voneinander ausgewählt aus Wasserstoffatomen, Hydroxyl-, Alkyl-, Alkenyl-, Alkoxy-, Oximo-, Alkyloximo-, Aryloximo-, Aryl-, Alkylepoxid-, Arylepoxid-, Alkylcarboxyl-, Arylcarboxyl-, Alkylether-, Arylether-, Alkylamid-, Arylamid-, Alkylamino- und Arylaminoresten, sind;
(II) hydrolysierbaren Vorläufern von (I);
(III) Hydrolysaten, die aus (II) gebildet werden, und
(B) einem Siliconkautschuk der Formel:
(R⁴ ₍₃₋ₚ₎R⁵ ₚSiO_{1/2})(R⁴ ₂SiO_{2/2})ₓ(R⁴ ₍₃₋ₚ₎R⁵ ₚSiO_{1/2}).
worin jedes R⁴ ein monovalenter Rest, unabhängig voneinander ausgewählt aus Alkyl- oder Arylresten, ist, jedes R⁵ ein monovalenter Rest, unabhängig voneinander ausgewählt aus Wasserstoffatomen, Hydroxyl-, Alkenyl-, Alkoxy-, Oximo-, Alkyloximo-, Aryloximo-, Alkylepoxid-, Arylepoxid-, Alkylcarboxyl-, Arylcarboxyl-, Alkylamid-, Arylamid-, Alkylaminound Arylaminoresten, ist, p gleich 1, 2 oder 3 ist und x von 6-1000 reicht;
wobei diese Komponente (B) in einer Menge von 2 Gew.-% bis 30 Gew.-% des Gesamtgewichts der Komponenten (A) und (B) vorhanden ist, so dass dieses kautschukmodifizierte Siliconharz einen Young-Modul von mindestens 6,9 x 10⁸ Pa hat.

2. Kautschukmodifiziertes Siliconharz nach Anspruch 1, wobei dieses kautschukmodifizierte Siliconharz eine Bruchzähigkeit, wie durch K_{Ic} gemessen, hat, die mindestens 25% größer als die Bruchzähigkeit der Organosiliciumzusammensetzung (A) in ihrem vollständig gehärteten und ungefüllten Zustand ist.

3. Kautschukmodifiziertes Siliconharz nach Anspruch 1 oder Anspruch 2, wobei dieses kautschukmodifizierte Siliconharz eine kritische Spannungsenergierelaxationsgeschwindigkeit, wie durch G_{Ic} gemessen, hat, die mindestens 25% größer als die Spannungsenergierelaxationsgeschwindigkeit der Organosiliciumzusammensetzung (A) in ihrem vollständig gehärteten und ungefüllten Zustand ist.

4. Verfahren zur Herstellung eines kautschukmodifizierten steifen Siliconharzes mit einem Young-Modul von mindestens 6,9 x 10⁸ Pa, umfassend die Schritte:
(1) Lösen der Organosiliconzusammensetzung nach Anspruch 1 in einem organischen Lösungsmittel in einer Feststoffkonzentration von nicht mehr als 30 Gew.-%;
(2) Hinzufügen eines Katalysators;
(3) Copolymerisieren der gesamten Komponente (B) mit Komponente (A) aus Anspruch 1 in den relativen Mengen, die in Anspruch 1 spezifiziert sind, ohne Ausfällung des copolymerisierten Produkts aus der Lösung oder die Gelierung desselben zu bewirken;
(4) Entfernen der flüchtigen Bestandteile aus der copolymerisierten Lösung und
(5) Erwärmen dieser von flüchtigen Bestandteilen befreiten copolymerisierten Lösung auf eine Temperatur, die ausreichend ist, um Härtung zu bewirken.

5. Verfahren nach Anspruch 4, wobei dieser Katalysator ein Kondensationskatalysator ist.

6. Verfahren nach Anspruch 5, wobei dieser Kondensationskatalysator ausgewählt ist aus Cholinoctoat oder Metallestern und Alkoxiden von Zinn, Titan und Zink.

7. Verfahren nach Anspruch 4, wobei dieser Katalysator ein Additionskatalysator ist.

8. Verfahren nach Anspruch 7, wobei dieser Additionskatalysator aus Platinverbindungen und -komplexen ausgewählt ist.

9. Verfahren nach Anspruch 8, wobei diese Copolymerisationslösung ferner ein Vernetzungsmittel auf Siliciumbasis enthält.

10. Verfahren nach Anspruch 4, wobei diese copolymerisierte Lösung durch radikalische Polymerisation erhältlich ist.

11. Verbundstoff, enthaltend eine kontinuierliche Phase und eine verstärkende Phase, **dadurch gekennzeichnet, dass** diese kontinuierliche Phase das kautschukmodifizierte steife Siliconharz nach Anspruch 1 ist.

## Revendications

1. Résine de silicone rigide modifiée par caoutchouc comprenant un produit de réaction copolymérisé de :
(A) une composition d'organosilicium choisie parmi :
(I) une résine d'organosilicone de silsesquioxane répondant à la formule
R¹ ₐR² _{b}R³ _{c}SiO_{(4-a-b-c)/2}
dans laquelle : a est une valeur numérique positive, b et c sont zéro ou des valeurs numériques positives pourvu que 0,8 ≤ (a + b + c) ≤ 1,6, R¹, R² et R³ représentent des radicaux monovalents choisis indépendamment parmi les atomes d'hydrogène, les radicaux hydroxyle, alkyle, alcényle, alcoxy, oximo, alkyloximo, aryloximo, aryle, alkylépoxyde, arylépoxyde, alkylcarboxyle, arylcarboxyle, alkyléther, aryléther, alkylamide, arylamide, alkylamino et arylamino ;
(II) les précurseurs hydrolysables de (I) ;
(III)les hydrolysats formés à partir de (II) ; et
(B) un caoutchouc de silicone répondant à la formule :
(R⁴ ₍₃₋ₚ₎R⁵ ₚSiO_{1/2}) (R⁴ ₂SiO_{2/2})ₓ(R⁴ ₍₃₋ₚ₎R⁵ ₚSiO_{1/2})
dans laquelle chaque radical R⁴ représente un radical monovalent choisi indépendamment parmi les radicaux alkyle ou aryle, chaque radical R⁵ représente un radical monovalent choisi indépendamment parmi les atomes d'hydrogène, les radicaux hydroxyle, alcényle, alcoxy, oximo, alkyloximo, aryloximo, alkylépoxyde, arylépoxyde, alkylcarboxyle, arylcarboxyle, alkylamide, arylamide, alkylamino et arylamino, p est égal à 1, 2 ou 3, et x varie de 6 à 1000 ;
et ledit composant (B) étant présent dans une quantité variant de 2 pour cent en poids à 30 pour cent en poids des poids combinés des composants (A) et (B), de sorte que ladite résine de silicone modifiée par caoutchouc a un module de Young d'au moins 6,9 x 10 Pa.

2. Résine de silicone modifiée par caoutchouc selon la revendication 1, dans laquelle ladite résine de silicone modifiée par caoutchouc a une résistance à la rupture, telle que mesurée par K_{Ic}, qui est au moins 25 % supérieure à la résistance à la rupture de la composition d'organosilicium (A) dans son état complètement durci et non chargé.

3. Résine de silicone modifiée par caoutchouc selon la revendication 1 ou la revendication 2, dans laquelle ladite résine de silicone modifiée par caoutchouc a une vitesse de libération de l'énergie de déformation critique, telle que mesurée par G_{Ic}, qui est au moins 25 % supérieure à la vitesse de libération de l'énergie de déformation critique de la composition d'organosilicium (A) dans son état complètement durci et non chargé.

4. Méthode pour la production d'une résine de silicone rigide modifiée par caoutchouc ayant un module de Young d'au moins 6,9 x 10⁸ Pa, comprenant les étapes consistant à :
(1) dissoudre la composition d'organosilicone selon la revendication 1 dans un solvant organique à une concentration de solides non supérieure à 30 % en poids ;
(2) ajouter un catalyseur ;
(3) copolymériser la totalité du composant (B) avec le composant (A) selon la revendication 1, dans les quantités relatives spécifiées dans la revendication 1, sans provoquer la précipitation du produit copolymérisé à partir de la solution ou sa gélification ;
(4) dévolatiliser la solution copolymérisée ; et
(5) chauffer ladite solution copolymérisée dévolatilisée jusqu'à une température suffisante pour entraîner le durcissement.

5. Méthode selon la revendication 4 dans laquelle ledit catalyseur est un catalyseur de condensation.

6. Méthode selon la revendication 5 dans laquelle ledit catalyseur de condensation est choisi parmi l'octanoate de choline ou les esters métalliques et les alcoolates d'étain, de titane et de zinc.

7. Méthode selon la revendication 4 dans laquelle ledit catalyseur est un catalyseur d'addition.

8. Méthode selon la revendication 7 dans laquelle ledit catalyseur d'addition est choisi parmi les composés et complexes de platine.

9. Méthode selon la revendication 8 dans laquelle ladite solution de copolymérisation comprend en outre un agent de réticulation à base de silicium.

10. Méthode selon la revendication 4 dans laquelle ladite solution copolymérisée peut être obtenue par polymérisation radicalaire.

11. Composite comprenant une phase continue et une phase renforçante, **caractérisé en ce que** ladite phase continue est la résine de silicone rigide modifiée par caoutchouc selon la revendication 1.
